Europäisches Patentamt

European Patent Office

Office européen des brevets

(11) Numéro de publication: **0 036 806**
**B1**

(12) **FASCICULE DE BREVET EUROPEEN**

(45) Date de publication du fascicule du brevet: **03.10.84**

(21) Numéro de dépôt: **81400401.6**

(22) Date de dépôt: **16.03.81**

(51) Int. Cl.³: **G 11 B 23/04**

(54) **Cassette vidéo perfectionnée.**

(30) Priorité: **26.03.80 FR 8006756**

(43) Date de publication de la demande:
**30.09.81 Bulletin 81/39**

(45) Mention de la délivrance du brevet:
**03.10.84 Bulletin 84/40**

(84) Etats contractants désignés:
**BE CH GB IT LI NL SE**

(56) Documents cités:
**DE-A-2 610 186**
**DE-A-2 722 639**
**FR-A-1 596 360**
**FR-A-2 131 760**
**FR-A-2 296 240**
**US-A-4 174 080**

(73) Titulaire: **GEFITEC S.A.**
**Avenue de la Gare, 5 Case postale 452**
**CH-1001 Lausanne 1 (CH)**

(72) Inventeur: **Posso, Patrick**
**10 Avenue Jurigoz**
**CH-1001 Lausanne 1 (CH)**

(74) Mandataire: **Caunet, Jean et al**
**Cabinet BEAU DE LOMENIE 55, rue d'Amsterdam**
**F-75008 Paris (FR)**

Courier Press, Leamington Spa, England.

# Description

La présente invention concerne une cassette vidéo du type de celles qui comportent un boîtier en deux parties dans lequel sont montées tournantes deux bobines à un seul flasque de façon qu'il soit possible de réduire leur extraxe à ce qui est juste nécessaire pour permettre l'enroulement sur un moyeu de la bande magnétique qui se déroule de l'autre moyeu et ainsi de réduire l'encombrement de la cassette. Dans une telle structure, les flasques sont situés respectivement près des fonds des parties de boîtier et évidemment se recouvrent en projection. Mais, pour chaque bobine, la bande magnétique ne serait pas guidée de l'autre côté du flasque si, à cet endroit, le fond de boîtier n'était pas équipé d'un moyen approprié.

Suivant une réalisation connue dans la demande de brevet FR—A—2 296 240 (SONY) et reprise dans le demande de brevet FR—A—2 131 760 (SONY), le fond de chaque partie de boîtier présente en surépaisseur, dans la zone exempte de flasque, une plage dont la surface fixe de guidage de la bande magnétique est coplanaire avec la face annulaire interne du flasque présent dans la zone restante du fond de boîtier considéré. Bien entendu, cette surface au contact de laquelle se trouve le bord correspondant de la bande magnétique doit être antiabrasive et parfaitement glissante.

Dans cette réalisation connue, la plage considérée est venue de moulage avec le fond de boîtier correspondant et est recouverte d'un film adhésif en Téflon graphité qui lui confère les propriétés superficielles recherchées.

La cassette connue décrite ci-dessus présente de nombreux inconvénients.

Le premier résidue en ce que chaque partie de boîtier est une pièce dissymétrique à épaisseur variable. Les moules sont donc complexes et le moulage est très difficile à exécuter si l'on vise, ce qui est indispensable pour le bon fonctionnement et la fiabilité de la cassette ainsi que pour la qualité de la reproduction et de l'enregistrement du son et de l'image, l'obtention d'une planéité parfaite des fonds et d'un parallélisme rigoureusement précis des axes de rotation des bobines perpendiculairement au fond correspondant.

Un deuxième inconvénient découle du fait que le film adhésif doit être positionné, tendu et posé sur les plages saillantes d'une façon parfaite. Or, des décollements peuvent se produire à l'usage et il en résulte inévitablement un blocage des bobines et surtout une détérioration de la bande magnétique qui, le plus souvent, ne peut pas être sauvée, non pas pour une réutilisation, mais pour une récupération de l'image et du son qui y sont enregistrés.

Indépendamment de cela, la pose des films adhésifs constitue, et c'est un troisième inconvénient important, une opération délicate, longue, fastidieuse, peu sûre dans son résultat et surtout très difficile à automatiser pour une fabrication en série.

L'évolution de la technique a été de concevoir des structures symétriques grâce auxquelles le contact de la bande magnétique avec les éléments de guidage fixes n'est qu'occasionnel et non plus permanent.

Les demandes allemandes DE—A—2.722.639 et DE—A—2.610.186 déposées par les firmes FUJI et ROLLEI, respectivement, illustrent cette évolution de la technique. En effet, DE—A—2722639 préconise l'utilisation de moyeux sans flasque et DE—A—2610186, l'utilisation d'une bobine à deux flasques avec un moyeu sans flasque.

Dès lors, la bande magnétique défile de façon coplanaire puisqu'elle ne subit en principe aucune sollicitation latérale déséquilibrée qui serait susceptible de renvoyer latéralement la bande. Simplement, il se peut que de temps en temps et de façon aléatoire, c'est-à-dire imprévisible, une spire ait tendance à flotter latéralement et par conséquent à se dérouler ou à s'enrouler à l'écart du plan de défilement. Ces deux demandes allemandes visent à renvoyer par rebond élastique "toute spire vagabonde dans l'enroulement des autres".

En d'autres termes, FUJI et ROLLEI ont perfectionné la bobine antérieure du type SONY en renonçant à la structure dissymétrique, source de flottement latéral, et en recherchant une structure symétrique non génératrice en principe de ce flottement.

La première conséquence de ce choix de structure symétrique est que les éléments fixes de guidage ne sont pas en contact permanent avec la bande magnétique de façon à n'avoir à intervenir que vis-à-vis de la ou des spires qui exceptionnellement quittent l'alignement dans le défilement.

La deuxième conséquence est que les éléments fixes de guidage sont en réalité fixés de façon flottante sur ce boîtier au moyen d'ergots. Ainsi, les ergots suivant DE—A—2722639 doivent permettre aux éléments de guidage dits fixes d'exercer un effet amortisseur élastique, ces éléments étant normalement écartés de la bande magnétique avec un jeu certes faible mais réel; et les ergots suivant DE—A—2610186 doivent permettre aux éléments de guidage de "flotter" autour des moyeux, sans rencontrer les flasques coplanaires des bobines voisines, ces éléments étant comme précédemment écartés avec un jeu suffisant de la bande magnétique enroulée.

Dès lors, ni DE—A—2722639 ni DE—A—2610186 ne peuvent apporter un enseignement significatif pour perfectionner la cassette vidéo telle que décrite dans la demande française SONY puisqu'il s'agit, selon l'invention, de perfectionner celle-ci en conservant sa structure dissymétrique (contact permanent avec la bande magnétique et fixation rigide avec le boîtier) et de renoncer à l'évolution FUJI ou ROLLEI selon laquelle une structure symétrique est adoptée (contact exceptionnel avec la bande magnétique et maintient des éléments de guidage fixes par le boîtier en tolérant une liberté de mouvement de ceux-ci).

Selon l'invention, telle que décrite dans les revendications, la cassette vidéo comporte toujours deux bobines à un seul flasque dont les moyeux respectifs sont montés tournants à entraxe réduit dans un boîtier en deux parties, de façon que les flasques se recouvrent partiellement en projection et soient contigus respectivement aux fonds, et ces parties de boîtier, chaque fond présentant, en regard du flasque dont il est écarté, au moins un élément dont la surface fixe de guidage de la bande magnétique prolonge dans le même plan la face annulaire interne du flasque rotatif voisin, cet élément étant antiabrasif et autolubrifiant.

Chaque fond est sensiblement plan et l'élément distinct précité est une pièce moulée en matière plastique, s'étendant jusqu'au fond plan considéré pour rattraper le niveau de ladite face annulaire interne de flasque voisin, cette pièce étant rapportée sur ledit fond de boîtier et fixée à celui-ci par un moyen de solidarisation antidéformant.

De préférence, chaque pièce moulée est un une résine polyacétal, telle qu'une résine polyformaldéhyde lubrifiée chimiquement. La fixation de chaque pièce moulée sur le fond de boîtier est réalisée au moyen d'ergots, faisant saillie sur le fond et traversant des trous de la pièce.

De préférence, cette fixation est réalisée par rivetage ultrasonique.

Ainsi, les fonds de boîtier sont pratiquement plans et très faciles à mouler dans des moules simplifiés qui, malgré cela, permettent d'obtenir une extrême précision dans la planéité des surfaces de glissement et dans le parallélisme des axes de rotation.

De plus, le montage des pièces est extrêmement commode et rapide; son exécution peut être automatisée sans aucune difficulté et très rapidement pendant celle d'autres opérations de montage.

Par ailleurs, tout risque de décollage est exclupuisque le film adhésif est supprimé. Dès lors, les bobines ne peuvent plus se bloquer, le ruban magnétique ne peut plus se détériorer et la fiabilité de la cassette se trouve accrue, en même temps que la qualité du fonctionnement améliorée.

Une forme de réalisation de l'objet de l'invention est représentée sur le dessin annexé.

Sur ce dessin:

la figure 1 est une perspective montrant en vue synoptique une cassette vidéo perfectionnée conformément à l'invention;

la figure 2 est une coupe prise suivant le plan II—II de la figure 1 passant par les axes de rotation des bobines; et

la figure 3 est une vue partielle analogue à la figure 2 illustrant les moyens antérieurs.

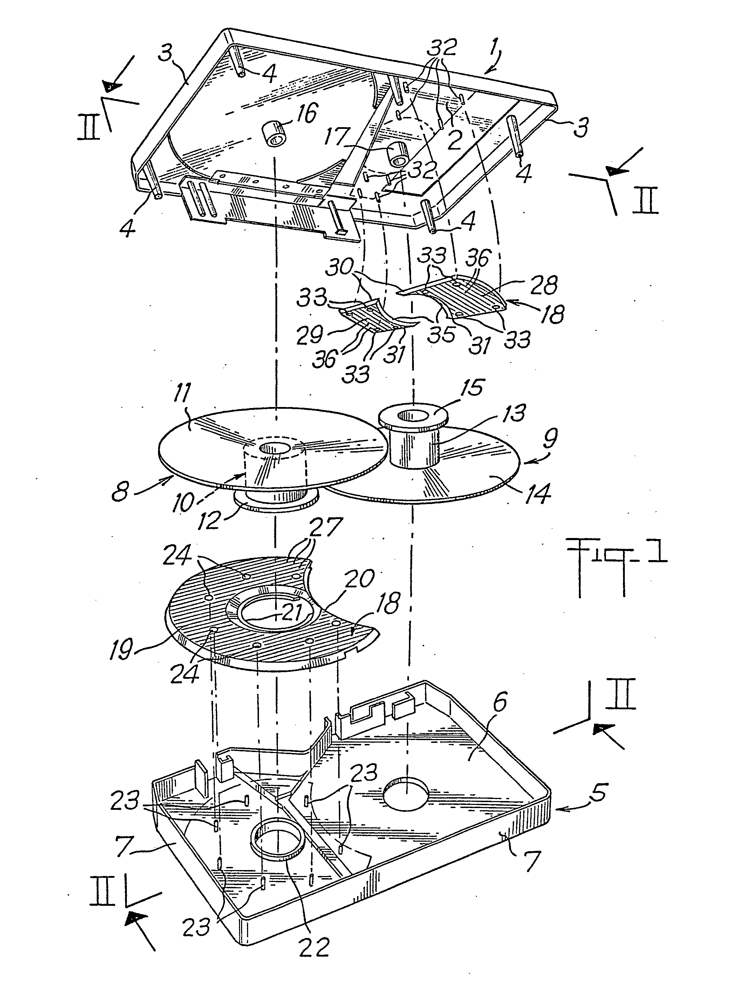

Ainsi que cela ressort clairement de la figure 1, le boîtier de la cassette est en deux parties 1 et 5, fabriquées séparément par injection d'une matière plastique appropriée dans un moule.

La partie dite supérieure 1 présente un fond 2 pratiquement plan et d'épaisseur constante, solidaire d'un rebord périphérique rectangulaire 3 et de tiges de positionnement 4.

La partie dite inférieure 5 présente un fond 6 pratiquement plan et d'épaisseur constante, solidaire d'un rebord périphérique rectangulaire 7 susceptible de se positionner sur les tiges 4 pour venir en contact et prolongement parfait avec le rebord 3.

La cassette comporte également deux bobines 8 et 9 pour le stockage d'une bande magnétique non représentée. La bobine 8 présente un moyeu tubulaire 10 parfaitement cylindrique pour l'enroulement et de déroulement de la bande, ce moyeu étant solidaire, d'un côté, d'un flasque coronal 11 et, de l'autre côté, d'une collerette 12 faiblement saillante. D'une manière analogue, la bobine 9 présente un moyeu tubulaire 13 parfaitement cylindrique pour le déroulement et respectivement l'enroulement de la bande, ce moyeu étant solidaire, du côté de la collerette 12, d'un flasque 14 et, du côté du flasque 11, d'une collerette 15.

Lorsque les bobines 8 et 9 sont logées dans le boîtier, leurs moyeux 10 et 13 sont montés fous autour de manchons tubulaires 16 et 17 respectivement, venus de moulage avec le fond 2 de la partie supérieure de boîtier 1 et rigoureusement perpendiculaires à ce fond, donc parallèles entre eux avec une extrême précision, en raison notamment de la planéité de ce fond. Dans cette position, le flasque 11 de la bobine 8 et contigu au fond 2, tandis que le flasque 14 de la bobine 9 est contigu au fond 6 opposé au précédent.

Mais, dans l'état brut décrit ci-dessus du boîtier, la bande magnétique enroulée autour du moyeu 13 de la bobine 9 est écartée du fond 2 et celle qui est enroulée autour du moyeu 10 de la bobine 8 est écartée du fond 6. Il s'agit donc de guider, à ces endroits, la tranche de ces enroulements de bande.

Suivant l'art antérieur décrit dans ce qui précède et illustré en partie par la figure 3, chaque fond 2 ou 6 comporte en surépaisseur auxdits endroits des plages A revêtues d'un film adhésif B en Téflon graphité préalablement découpé suivant un contour qui permet de recouvrir les plages considérées, d'en déborder et de s'appliquer sur la partie environnante du fond correspondant. Le film B définit une surface fixe 18 de guidage de l'enroulement de bande magnétique conjugué et, à cet effet, la surface 18 est coplanaire avec la face annulaire interne du flasque de bobine contigue au fond auquel est associée la surface 18.

Suivant l'invention les fonds présentent, aux endroits précités, la même épaisseur qu'en regard des flasques; mais, pour rattraper le niveau des faces annulaires internes de ces flasques, lesdits fonds de boîtier sont rendus solidaires auxdits endroits de pièces moulées ayant des propriétés analogues, voire améliorées, à celles du film B.

Ainsi, les pièces rapportées, décrites dans ce qui suit, sont constituées par une matière plastique moulable, autolubrifiante pour la glisse de la bande et antiabrasive pour la conservation de celle-ci. Chaque pièce moulée est une résine polyacétal telle qu'une résine polyformaldéhyde lubrifiée chimiquement. Par exemple, chaque pièce peut être constituée par la matière plastique commercialisée par Dupont de Nemours sous la dénomination "DELRIN CL" ou "ZYTEL".

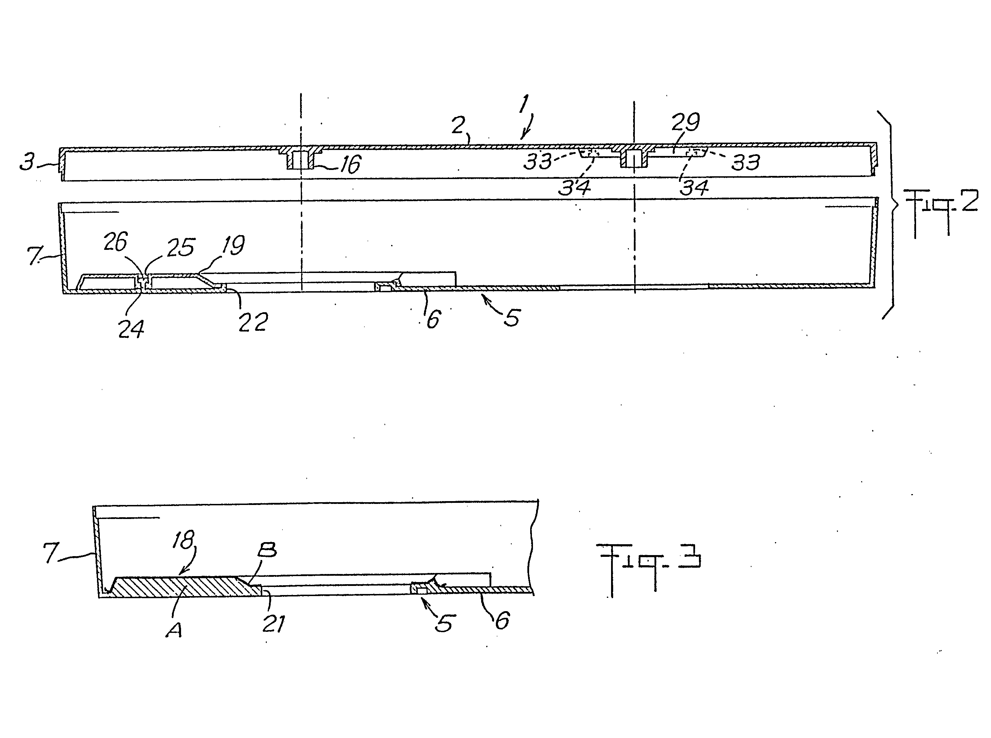

En regard de la bobine 8, le fond de boîtier 6 est solidaire d'une pièce 19 (figure 1) en forme de couronne tronquée par un arc de cercle 20 pour le passage libre du flasque 14 de la bobine 9. L'orifice central chanfreiné 21 de cette pièce s'emboîte normalement sur un anneau 22 venu de moulage en saillie sur le fond précité 6 et centre la collerette 12 de la bobine 8. De plus, la solidarisation de ladite pièce 19 avec ledit fond 6 est assurée au moyen d'ergots proéminents 23, au nombre de sept dans l'example représenté, également venus de moulage avec ce fond, traversant des trous 24 de cette pièce (figures 1 et 2) et sertis, par rivetage ultrasonique, dans des chambrages 25 de ces trous pour former des têtes 26 de retenue. Enfin, la surface de guidage 18 de la pièce 19 est de préférence cannelée et ses cannelures 27 peuvent être parallèles entre elles ainsi qu'à la ligne reliant les axes de rotation des bobines.

D'une manière analogue quant au principe, le fond de boîtier 2 est solidaire, en regard de la bobine 9, de deux pièces 28 et 29 se prolongeant l'une, l'autre et délimitées par deux cordes parallèles 30, 31 dans une couronne circulaire. Ces pièces sont fixées contre le fond 2 a moyen d'ergots proéminents 32 au nombre de quatre par pièce dans l'exemple représenté. Ces ergots sont venus de moulage avec ledit fond 2, traversent des trous 33 ménagés dans les pièces 28, 29 et sont sertis, par rivetage ultrasonique, dans des chambrages 34 (figure 2) de ces trous pour former des têtes épaulées de retenue. Les arcs centraux 35 desdites pièces délimitent un orifice dans lequel prend place la collerette 15 de la bobine 9. De plus, la surface de guidage 18 de la bande magnétique est constituée par des cannelures 36 venues de moulage avec les pièces 28, 29; ces cannelures sont avantageusement parallèles entre elles et, de préférence, à la ligne reliant les axes de rotation.

Enfin, les deux parties 1 et 5 de boîtier comportent, d'une façon connue en soi et sans interférence avec l'invention, des éléments saillants venus de moulage qui participent, directement ou par l'intermédiaire d'organes rapportés, au guidage de la bande magnétique ainsi qu'à la lecture, l'enregistrement et l'effacement des signaux.

## Revendications

1. Cassette vidéo comportant deux bobines (8, 9) à un seul flasque (11, 14) dont les moyeux (10, 13) respectifs sont montés tournants à entraxe réduit dans un boîtier en deux parties (1 et 5) de façon que les flasques se recouvrent partiellement en projection et soient contigus respectivement aux fonds (2 et 6) de ces parties de boîtier, chaque fond présentant, en regard du flasque dont il est écarté, au moins un élément dont la surface fixe (18) de guidage de la bande magnétique prolonge dans le même plan la face annulaire interne du flasque rotatif voisin, cet élément étant antiabrasif et autolubrifiant, caractérisée en ce que chaque fond est sensiblement plan et en ce que l'élément distinct précité est une pièce (19, 28 ou 29) moulée en matière plastique s'étendant jusqu'au fond plan considéré pour rattraper le niveau de ladite face annulaire interue du flasque voisin, cette pièce étant rapportée sur ledit fond de boîtier et fixée à celui-ci par un moyen de solidarisation antidéformant.

2. Cassette vidéo selon la revendication 1, caractérisé en ce que chaque pièce moulée est en une résine polyacétal, telle qu'une résine polyformaldéhyde lubrifiée chimiquement.

3. Cassette vidéo selon la revendication 1, caractérisée en ce que la surface de contact de chaque pièce est venue de moulage cannelée, ses cannelures étant parallèles entre elles et, de préférence, à la ligne reliant les axes de rotation des bobines.

4. Cassette vidéo selon la revendication 1, caractérisée en ce que la fixation de chaque pièce moulée sur le fond de boîtier est réalisée au moyen d'ergots (23, 32), connus en soi, faisant saillie sur le fond et traversant des trous (24, 33) de la pièce.

5. Cassette vidéo selon la revendication 4, caractérisée en ce que la fixation au moyen d'ergots est réalisée par rivetage ultrasonique.

## Patentansprüche

1. Videokasette, umfassend zwei Spulen (8, 9) mit je einer einzigen Scheibe (11, 14), deren jeweilige Spulenkerne (10, 13) in reduziertem Achsabstand in einem Gehäuse aus zwei Teilen (1 und 5) derart drehbar gelagert sind, daß sich die Scheiben teilweise im Überstand überdekken und an die Böden (2 bzw. 6) dieser Teile des Gehäuses angrenzen, wobei jeder Boden vis à vis der Scheibe, von der er sich im Abstand befindet, zumindest ein Element aufweist, dessen fixe Fläche (18) zur Führung des Magnetbandes die innere Ringfläche der benachbarten Drehscheibe in derselben Ebene verlängert, wobei dieses Element abriebbeständig und selbstschmierend ist, dadurch gekennzeichnet, daß jeder boden im wesentlichen eben ist und daß das separate Element ein aus Plastikmaterial gegossenes Stück (19, 28 oder 29) ist, das sich bis zum betreffenden ebenen Boden erstreckt, um zum Niveau der inneren Ringfläche der benachbarten Scheibe zu gelangen, wobei dieses Stück auf dem Boden des Gehäuses aufgesteckt und durch ein verformungsbeständiges Verbindungsmittel auf demselben fixiert ist.

2. Videokasette nach Anspruch 1, dadurch gekennzeichnet, daß jedes Gußstück aus einem Polyacetalharz, wie einem chemisch gefetteten Polyformaldehydharz, besteht.

3. Videokasette nach Anspruch 1, dadurch gekennzeichnet, daß die Kontaktfläche jedes Stücks geriffelt gegossen ist, wobei seine Riffelungen parallel zueinander und vorzugsweise zu der die Rotationsachsen der Spulen verbindenden Linie sind.

4. Videokasette nach Anspruch 1, dadurch gekennzeichnet, daß die Fixierung jedes Gußstücks auf dem Boden des Gehäuses mittels an sich bekannter Zapfen (23, 32) realisiert ist, welche am Boden vorspringen und Löcher (24, 33) des Stücks durchsetzen.

5. Videokasette nach Anspruch 4, dadurch gekennzeichnet, daß die Fixierung mittels Zapfen durch Ultraschall-Vernietung realisiert ist.

**Claims**

1. Video cassette comprising two spools (8, 9) with single disk (11, 14) the respective hubs (10, 13) of which spool are rotatably mounted with the minimum distance possible between their axis of rotation inside a casing in two parts (1 and 5), so that the said disks partly overlap in projection and are contiguous respectively to the bases (2 and 6) of the said casing parts, each base being provided, opposite the disk which it does not touch, with at least one element whose the fixed guiding surface (18) for the magnetic tape extends in the same plane the internal annular face of the adjacent rotary disk, this element being anti-abrasive and self-lubricating, characterized in that each base is substantially plane and in that the above-mentioned distinct element is a part (19, 28 or 29) molded in plastic material extending until the plane base in question to reach the level of said internal annular face of the adjacent disk, this part being added on said base of the casing and being fixed thereon by non-deformable securing means.

2. Video cassette according to claim 1, characterized in that each molded part is made of polyacetal resin, such as a chemically lubricated polyformaldehyde resin.

3. Video cassette according to claim 1, characterized in that the contacting surface of each part is grooved when molded, its grooves being parallel together and preferably also to the line joining the axes of rotation of the spools.

4. Video cassette according to claim 1, characterized in that the fixation of each molded part against the base of the casing is carried out by means of known protruding studs (23, 32) traversing holes (24, 33) provided in the part.

5. Video cassette according to claim 4, characterized in that the fixation by means of studs is carried out by ultrasonic riveting.

Fig. 1

Fig.2

Fig.3